# EUROPEAN PATENT APPLICATION

(11) **EP 4 403 951 A2**
(43) Date of publication of application: **24.07.2024**
(21) Application number: 24152908.0
(22) Date of filing: 19.01.2024
(51) Int. Cl.: G01S 7/41, G01S 13/42, G01S 13/52, G01S 13/56, G01S 13/58, G01S 7/40

(54) **FULLY ADAPTIVE RADAR FOR UBIQUITIOUS HUMAN SENSING APPLICATIONS**

(30) Priority: 19.01.2023 US 202318156828
(71) Applicant: Infineon Technologies AG, 85579 Neubiberg (DE)
(72) Inventor: SERVADEI, Lorenzo, 81539 München (DE); STADELMAYER, Thomas, 93173 Wenzenbach (DE); SANTRA, Avik, Irvine, 92618 (US); MANDL, Christian, 81735 München (DE)
(74) Representative: 2SPL Patentanwälte PartG mbB

(57) **Abstract**

A method of operating a radar system includes: receiving a range-angle image (RAI) and a range-Doppler image (RDI) that are based on raw data from a radar sensor of the radar system; choosing, from a list of potential tasks, a task for the radar system to perform based at least on the RAI and the RDI; and modifying one or more parameters of the radar system in accordance with the chosen task for the radar system.

## Description

### TECHNICAL FIELD

The present disclosure relates generally to an electronic system and method, and, in particular embodiments, to a fully adaptive radar system and methods of operating the fully adaptive radar system.

### BACKGROUND

Applications in the millimeter-wave frequency regime have gained significant interest in the past few years due to the rapid advancement in low cost semiconductor technologies, such as silicon germanium (SiGe) and fine geometry complementary metal-oxide semiconductor (CMOS) processes. Availability of high-speed bipolar and metal-oxide semiconductor (MOS) transistors has led to a growing demand for integrated circuits for millimeter-wave applications at e.g., 24 GHz, 60 GHz, 77 GHz, and 80 GHz and also beyond 100 GHz. Such applications include, for example, automotive radar systems and multi-gigabit communication systems.

In some radar systems, the distance between the radar and a target is determined by transmitting a frequency modulated signal, receiving a reflection of the frequency modulated signal (also referred to as the echo), and determining a distance based on a time delay and/or frequency difference between the transmitted and received frequency modulated signals. Accordingly, some radar systems include a transmitting antenna for transmitting the radio-frequency (RF) signal, and a receiving antenna for receiving the reflected RF signal, as well as the associated RF circuits used to generate the transmitted RF signal and to receive the RF signal. In some radar systems, multiple antennas may be used to implement directional beams using phased array techniques. A multiple-input and multiple-output (MIMO) configuration with multiple chipsets can be used to perform coherent and non-coherent signal processing.

### SUMMARY

There may be a demand for providing an improved concept for a method of operating a radar system, and a radar system.

Such a demand may be satisfied by the subject matter of any of the claims.

In accordance with an embodiment, a method of operating a radar system includes: receiving a range-angle image (RAI) and a range-Doppler image (RDI) that are based on raw data from a radar sensor of the radar system; choosing, from a list of potential tasks, a task for the radar system to perform based at least on the RAI and the RDI; and modifying one or more parameters of the radar system in accordance with the chosen task for the radar system.

In accordance with an embodiment, a method of operating a radar system includes: transmitting radar signals using a transmit antenna of the radar system; receiving reflected radar signals using one or more receive antennas of the radar system; generating, by a processing system of the radar system, a range-angle image (RAI) and a range-Doppler image (RDI) that are based on the received reflected radar signals; choosing, by the processing system of the radar system, a task from a list of potential tasks for the radar system to perform based on at least the RAI and the RDI; and modifying, by the processing system of the radar system, one or more parameters of the radar system in accordance with the chosen task for the radar system.

In accordance with an embodiment, a radar system includes: a radar sensor configured to transmit a plurality of radar signals towards a scene, receive a plurality of reflected radar signals from the scene, and generate raw data based on the plurality of reflected radar signals; and a processing system configured to: generate a range-angle image (RAI) and a range-Doppler image (RDI) based on the raw data; choose, from a list of potential tasks, a task for the radar system to perform based on at least the RAI and the RDI; and modify one or more parameters of the radar system in accordance with the chosen task for the radar system.

### BRIEF DESCRIPTION OF THE DRAWINGS

For a more complete understanding of the present invention, and the advantages thereof, reference is now made to the following descriptions taken in conjunction with the accompanying drawings, in which:
Figure 1 illustrates a schematic diagram of a millimeter-wave radar system, in accordance with an embodiment;
Figure 2 illustrates a sequence of chirps transmitted by the transmitting (TX) antenna of Figure 1, in accordance with an embodiment;
Figure 3 illustrates an example receiver processing chain of a millimeter-wave radar system, in accordance with an embodiment;
Figure 4 illustrates a block diagram of the millimeter-wave radar system of Figure 1, in accordance with an embodiment;
Figure 5 illustrates a flow chart of a method of operating a fully adaptive cognitive radar system using a rule-based decision engine, in accordance with an embodiment;
Figure 6 illustrates the information generated by the various processing steps of the method of Figure 5, in accordance with an embodiment;
Figure 7 illustrates a diagram of a detection and tracking system for detecting and tracking human targets, in accordance with an embodiment;
Figure 8 illustrates a flow chart of a method of operating a fully adaptive cognitive radar system using a neural network decision engine, in accordance with an embodiment;
Figure 9 illustrates the training of a neural network used for choosing the task for a fully adaptive cognitive radar system, in accordance with an embodiment; and
Figure 10 illustrates a flow chart of a method of operating a radar system, in accordance with an embodiment.

Corresponding numerals and symbols in different figures generally refer to corresponding parts unless otherwise indicated. The figures are drawn to clearly illustrate the relevant aspects of the various embodiments and are not necessarily drawn to scale.

### DETAILED DESCRIPTION OF ILLUSTRATIVE EMBODIMENTS

The making and using of the embodiments disclosed are discussed in detail below. It should be appreciated, however, that the present invention provides many applicable inventive concepts that can be embodied in a wide variety of specific contexts. The specific embodiments discussed are merely illustrative of specific ways to make and use the invention, and do not limit the scope of the invention.

The description below illustrates the various specific details to provide an in-depth understanding of several example embodiments according to the description. The embodiments may be obtained without one or more of the specific details, or with other methods, components, materials and the like. In other cases, known structures, materials or operations are not shown or described in detail so as not to obscure the different aspects of the embodiments. References to "an embodiment" in this description indicate that a particular configuration, structure or feature described in relation to the embodiment is included in at least one embodiment. Consequently, phrases such as "in one embodiment" that may appear at different points of the present description do not necessarily refer exactly to the same embodiment. Furthermore, specific formations, structures or features may be combined in any appropriate manner in one or more embodiments.

Embodiments of the present invention will be described in a specific context, a fully adaptive cognitive radar system for people sensing, e.g., in an indoor environment. Embodiments of the present invention may be used for tracking other targets (e.g., animals, vehicles, robots, etc.) and/or may operate in regimes different than millimeter-wave. Some embodiments may be used outdoors.

A radar system, such as a millimeter-wave radar system, may be used for human sensing applications. In the discussion herein, human sensing applications refer to a wide variety of applications, such as presence sensing (e.g., detecting whether or not a person is present in an environment), people tracking (e.g., tracking the location and/or movement of one or more persons), people counting (e.g., counting the number of people in an environment), gesture recognition (e.g., recognizing the gesture of a person), or vital sensing (e.g., monitoring/measuring the vital sign(s) of a person such as heart beat rate and/or respiration rate).

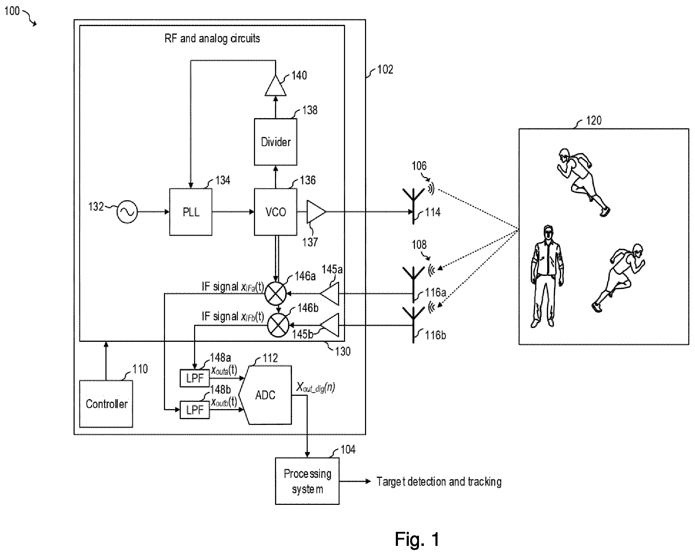

Figure 1 shows a schematic diagram of millimeter-wave radar system 100, in accordance with an embodiment of the present invention. Millimeter-wave radar system 100 (may also be referred to as a radar system 100 for short) includes a millimeter-wave radar sensor 102 and a processing system 104.

During normal operation, the millimeter-wave radar sensor 102 operates as a frequency-modulated continuous-wave (FMCW) radar sensor and transmits a plurality of TX radar signals 106, such as chirps, towards a scene 120 using one or more transmitting (TX) antennas 114. The radar signals 106 are generated using an RF and analog circuits 130. The radar signals 106 may be, e.g., in the 20 GHz to 122 GHz range. Other frequencies may also be used.

The objects in the scene 120 may include one or more static or moving objects, such as idle and moving humans, furniture, mechanical structures, walls and other types of structures. Other obj ects may also be present in the scene 120.

The radar signals 106 are reflected by objects in the scene 120. The reflected radar signals 108, which are also referred to as the echo signal, are received by a plurality of receiving (RX) antennas. The RF and analog circuits 130 processes the received reflected radar signals 108 using, e.g., bandpass filters (BPFs), low-pass filters (LPFs), mixers, low-noise amplifier (LNA), and/or intermediate frequency (IF) amplifiers in ways known in the art to generate an analog signal *xₒᵤₜₐ*(t) and *x_{outb}*(t)*.*

The analog signal *xₒᵤₜₐ*(t) and *x_{outb}*(t) are converted to raw digital data *x_{out_dig}*(*n*) using analog-to-digital converter (ADC) 112. The raw digital data *x_{out_dig}*(*n*) is processed by the processing system 104 to perform various functions, such as detecting targets and their positions. In some embodiments, the processing system 104 may also be used to identify, classify, and/or track one or more targets in the scene 120.

Although Figure 1 illustrates a radar system with two receiving antennas 116 (antennas 116a and 116b), it is understood that more than two receiving antennas 116, such as three or more, may also be used.

Although Figure 1 illustrates a radar system with a single transmitting antenna 114, it is understood that more than one transmitting antennas 114, such as two or more, may also be used.

A controller 110 controls one or more circuits of the millimeter-wave radar sensor 102, such as the RF and analog circuit 130 and/or the ADC 112. The controller 110 may be implemented, e.g., as a custom digital or mixed signal circuit, for example. The controller 110 may also be implemented in other ways, such as using a general-purpose processor or controller, for example. In some embodiments, the processing system 104 implements a portion or all of the controller 110.

The processing system 104 may be implemented with a general-purpose processor, a controller or a digital signal processor (DSP) that includes, for example, combinatorial circuits coupled to a memory. In some embodiments, the processing system 104 may be implemented as an application specific integrated circuit (ASIC). In some embodiments, the processing system 104 may be implemented with an ARM, RISC, or x86 architecture, for example. In some embodiments, the processing system 104 may include an artificial intelligence (AI) accelerator. Some embodiments may use a combination of hardware accelerator and software running on a DSP or general-purpose microcontroller. Other implementations are also possible.

In some embodiments, the millimeter-wave radar sensor 102 and a portion or all of the processing system 104 may be implemented inside the same integrated circuit (IC). For example, in some embodiments, the millimeter-wave radar sensor 102 and a portion or all of the processing system 104 may be implemented in respective semiconductor substrates that are integrated in the same package. In other embodiments, the millimeter-wave radar sensor 102 and a portion or all of the processing system 104 may be implemented in the same monolithic semiconductor substrate. In some embodiments, the millimeter-wave radar sensor 102 and the processing system 104 are implemented in respective integrated circuits. In some embodiments, a plurality of integrated circuits is used to implement the millimeter-wave radar sensor 102. In some embodiments, a plurality of integrated circuits is used to implement the processing system 104. Other implementations are also possible.

As a non-limiting example, the RF and analog circuits 130 may be implemented, e.g., as shown in Figure 1. During normal operation, a voltage-controlled oscillator (VCO) 136 generates radar signals, such as a linear frequency chirps (e.g., from 57 GHz to 64 GHz, or from 76 GHz to 77 GHz), which are transmitted by the transmitting antenna 114. The VCO 136 is controlled by a phase-locked loop (PLL) 134, which receives a reference clock signal (e.g., 80 MHz) from a reference oscillator 132. The PLL 134 is controlled by a control loop that includes a frequency divider 138 and an amplifier 140. An amplifier 137 may be used to drive the transmitting antenna 114.

The TX radar signals 106 transmitted by the transmitting antenna 114 are reflected by objects in the scene 120 and received by the receiving antennas 116a and 116b. The echo received by the receiving antennas 116a and 116b are mixed with a replica of the signal transmitted by the transmitting antenna 114 using mixers 146a and 146b, respectively, to produce respective intermediate frequency (IF) signals *x_{IFa}*(*t*) *x_{IFb}*(*t*) (also known as beat signals). In some embodiments, the beat signals *x_{IFa}*(*t*) and *x_{IFb}*(*t*) have a bandwidth between 10 kHz and 1 MHz. Beat signals with a bandwidth lower than 10 kHz or higher than 1 MHz is also possible. Amplifiers 145a and 145b may be used to receive the reflected radar signals from the receiving antennas 116a and 116b, respectively.

The beat signals *x_{IFa}*(*t*) and *x_{IFb}*(*t*) are filtered with respective low-pass filters (LPFs) 148a and 148b and then sampled by the ADC 112. The ADC 112 is advantageously capable of sampling the filtered beat signals *xₒᵤₜₐ*(*t*) and *x_{outb}*(*t*) with a sampling frequency that is much smaller than the frequency of the signal received by the receiving antennas 116a and 116b. Using FMCW radars, therefore, advantageously allows for a compact and low-cost implementation of the ADC 112, in some embodiments.

The raw digital data *x_{out_dig}*(*n*), which in some embodiments include the digitized version of the filtered beat signals *xₒᵤₜₐ*(*t*) and *x_{outb}*(*t*)*,* is (e.g., temporarily) stored, e.g., in matrices of N_{c} x Nₛ per receiving antenna 116, where N_{c} is the number of chirps considered in a frame and Nₛ is the number of transmit samples per chirp, for further processing by the processing system 104.

In some embodiments, the ADC 112 is a 12-bit ADC with multiple inputs. ADCs with higher resolution, such as 14-bits or higher, or with lower resolution, such as 10-bits, or lower, may also be used. In some embodiments, an ADC per receiver antenna may be used. Other implementations are also possible.

In some embodiments, the raw digital data *x_{out_dig}*(*n*) generated by the ADC 112 is processed by the processing system 104 for various human sensing applications, such as presence sensing, people tracking, people counting, gesture recognition, or vital sensing. Detecting and tracking human targets in an indoor environment may be desirable for a variety of reasons, such as security reasons (e.g., detecting an intruder), marketing reasons (e.g., studying shopper behavior), productivity reasons (e.g., studying employees in an assembly line), automation reasons (e.g., taking an action based on the presence or trajectory of a target, such as a human), and/or research and development reasons, for example.

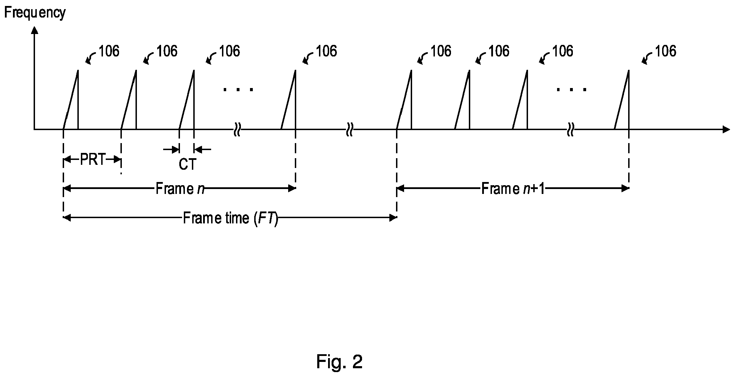

Figure 2 shows a sequence of chirps 106 transmitted by TX antenna 114, according to an embodiment of the present invention. As shown by Figure 2, the chirps 106 are organized in a plurality of frames (also referred to as physical frames) and may be implemented as up-chirps. Some embodiments may use down-chirps or a combination of up-chirps and down-chirps, such as up-down chirps and down-up chirps. Other waveform shapes may also be used.

As shown in Figure 2, each frame may include a plurality of chirps 106 (also referred to, generally, as pulses). For example, in some embodiments, the number of pulses in a frame is 16. Some embodiments may include more than 16 pulses per frame, such as 20 pulses, 32 pulses, or more, or less than 16 pulses per frame, such as 10 pulses, 8 pulses, 4 or less. In some embodiments, each frame includes only a single pulse.

In some embodiments, frames are repeated every *FT* time. In some embodiments, *FT* time is 50 ms. A different *FT* time may also be used, such as more than 50 ms, such as 60 ms, 100 ms, 200 ms, or more, or less than 50 ms, such as 45 ms, 40 ms, or less.

In some embodiments, the *FT* time is selected such that the time between the beginning of the last chirp of frame n and the beginning of the first chirp of frame n+1 is equal to PRT. Other embodiments may use or result in a different timing.

The time between chirps of a frame is generally referred to as pulse repetition time (PRT). In some embodiments, the PRT is 5 ms. A different PRT may also be used, such as less than 5 ms, such as 4 ms, 2 ms, or less, or more than 5 ms, such as 6 ms, or more.

The duration of the chirp (from start to finish) is generally referred to as chirp time (CT). In some embodiments, the chirp time may be, e.g., 64 µs. Higher chirp times, such as 128 µs, or higher, may also be used. Lower chirp times, may also be used.

In some embodiments, the chirp bandwidth may be, e.g., 4 GHz. Higher bandwidth, such as 6 GHz or higher, or lower bandwidth, such as 2 GHz, 1 GHz, or lower, may also be possible.

In some embodiments, the sampling frequency of millimeter-wave radar sensor 102 may be, e.g., 1 MHz. Higher sampling frequencies, such as 2 MHz or higher, or lower sampling frequencies, such as 500 kHz or lower, may also be possible.

In some embodiments, the number of samples used to generate a chirp may be, e.g., 64 samples. A higher number of samples, such as 128 samples, or higher, or a lower number of samples, such as 32 samples or lower, may also be used.

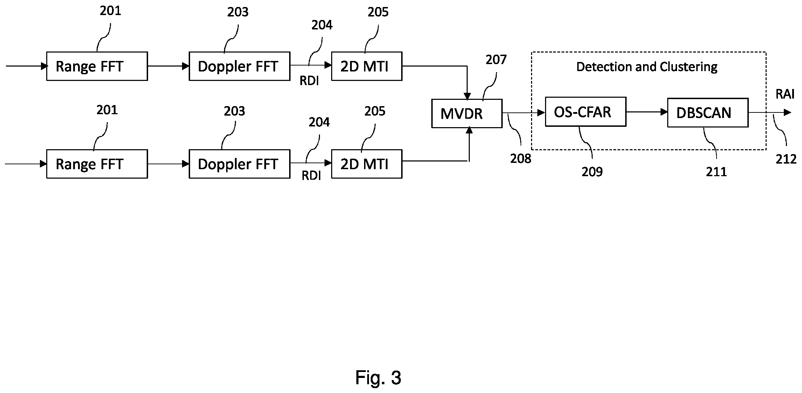

Figure 3 illustrates an example receiver processing chain of a millimeter-wave radar system, in accordance with an embodiment. The receiver processing chain includes various digital signal processing steps that may be implemented by the processing system 104 of the millimeter-wave radar system 100. For simplicity, no all processing steps of the receiver processing chain are illustrated in Figure 3. In addition, skilled artisans will readily appreciate that the receiver processing chain in Figure 3 is merely a non-limiting example, other configurations for the receiver processing chain are possible and are fully intended to be included within the scope of the present disclosure.

Figure 3 shows two parallel branches in the receiver processing chain, each comprising a block 201, a block 203, and a block 205. Each of the two parallel branches processes the raw digital data *x_{out_dig}*(*n*) that corresponds to one of the receiving channels (e.g., from one of the receiving antennas 116). The example of Figure 3 assumes that two receiving antennas 116 are used in the radar system. The number of parallel branches in the receiver processing chain may be adjusted to other values to match the number of receiving antennas 116 used in the radar system.

Referring to Figure 3, in block 201, a range fast Fourier transform (FFT) is performed on the raw digital data *x_{out_dig}*(*n*) from each receiving channel (e.g., from each receiving antenna 116). For example, in some embodiments, a windowed FFT having a length of a chirp (e.g., 106) is calculated for each of a predetermined number of chirps (e.g., all chirps) in a frame. The result of the range FFT is an indication of energy distribution across ranges for each chirp.

Next, in block 203, a Doppler FFT is performed on the output range FFT data (e.g., for each receiving antenna 116) generated by block 201. For example, an FFT is calculated across each range bin over a number of consecutive periods to extract Doppler information. The result of block 203 is a range Doppler map 204 (also known are range-Doppler image or RDI) for each of the receiving channels (e.g., for each receiving antenna 116).

Next, in block 205, two-dimensional (2D) moving target indication (MTI) filtering is applied to each RDI to generate first filtered images. In some embodiments, performing MTI filtering serves to discriminate a target against the clutter. For example, in some embodiments, after MTI filtering is performed on the RDIs, only targets with high motion are retained as their energy varies across Doppler images. Thus, in some embodiments, after 2D MTI filtering, a target (e.g., a human in a room) may be identifiable in the filtered RDIs while information about the background (e.g., walls of the room, furniture in the room, etc.) may be partially or fully removed from the filtered RDIs. In some embodiments, the 2D MTI filter is implemented as a first order finite impulse response (FIR) filter.

Next, in block 207, digital beamforming is performed to form a raw range-angle map 208 (also known as raw range-angle image or raw RAI), in which the angle of arrival is determined by comparing complex numbers from each of the RDIs (e.g., from respective receiving antennas 116). For example, a minimum variance distortionless response (MVDR) technique, also known as Capon, may be used to determine the angle of arrival. Other methods may also be used.

Additional processing, such as detection and clustering of potential targets is performed. In Figure 3, an order statistics (OS) constant false alarm rate (CFAR) (OS-CFAR) detection is performed in block 209. The CFAR detector generates a detection image in which, e.g., "ones" represent targets and "zeros" represent non-targets based, e.g., on the power levels of the raw RAI 208. For example, in some embodiments, the CFAR detector compares the power levels of the raw RAI 208 with a threshold, and points above the threshold are labeled as targets while points below the threshold are labeled as non-targets. Although targets may be indicated by ones and non-targets may be indicated by zeros, it is understood that other values may be used to indicate targets and non-targets.

In some embodiments, targets present in the detection image are clustered in block 211 using a density-based spatial clustering of applications with noise (DBSCAN) algorithm to associate targets to clusters. The output of block 211 is a processed version of the raw RAI 208, which is referred to as a RAI 212 in the discussion herein. In the illustrated embodiment, the RAI 212 is a grouping (cluster) of the detected points, so that each grouping is associated with a respective target.

The processing illustrated in Figure 3 may be referred to as the front-end processing of the receiver processing chain of the millimeter-wave radar system 100. The RAI 212 and the RDIs 204 generated are used in further processing for different human sensing applications, such as presence sensing, people counting, people tracking, gesture recognition, or vial sensing. For example, further processing may include parameter estimations for each clustered target (e.g., from block 211). As an example, an estimation of the centroid of the range of each target cluster is performed. As another example, angle of arrival (AoA) is estimated for each target. A minimum variance distortionless response (MVDR) technique may be used to determined angle of arrival for each target. In some embodiments, various neural networks are used to perform different human sensing tasks using the RAI and RDIs. Other methods may also be used.

In the example of Figure 3, one RAI 212 and two RDIs 204 are generated by the front-end processing of the receiver processing chain. In some embodiments, for a radar system with K receiving antennas 116, one RAI 212 and *K* RDIs 204 are generated for further processing by the processing system 104 of the radar system 100. In some embodiments, more than one RAIs 212, such as two RAIs 212 and a plurality of RDIs 204 are used for further processing by the processing system 104. For example, two antenna arrays may be used to generate two RAIs and a plurality of RDIs. The additional RAI 212 may be used to provide additional information (e.g., elevation of the target) regarding the target. Discussion below uses the example of one RAI with multiple (e.g., ***K***) corresponding RDIs, with the understanding that the principle disclosed herein may be applied to for systems with multiple RAIs and multiple corresponding RDIs.

Cognitive radar systems are radar systems (e.g., millimeter-wave radar systems) that adapt their behavior based on the sensed environment. Currently, a cognitive radar system focuses on one specific task (e.g., for a specific application), and adjusts its parameters to optimize the performance of the cognitive radar system for the specific task. Examples of adjusting parameters in a cognitive radar system include, e.g., spectrum allocation, optimal waveform selection, adaptive selection of detection thresholds (e.g. constant false alarm rate (CFAR) detectors), adaptive clutter suppression with space-time adaptive processing (STAP), ground moving target indication (GMTI), radar identification, and pulse compression improvement.

The conventional cognitive radar system is designed to perform a single, fixed task. However, the conditions of the environment in which the cognitive radar system operates may not be suitable for the fixed task. For example, if a cognitive radar system is designed for indoor people tracking, when the number of people in the room exceeds a certain number, and/or when background interference signal level is high in the room, the cognitive radar system will likely fail the task of people tracking, because the processing (e.g., algorithm) for people tracking is not designed to handle such conditions. As another example, a cognitive radar system designed for vital sensing may work well when there is only one person in the room and when the person is static (e.g., being seated, standing still, or lying down), but may fail when the person is moving.

Artificial intelligence (AI) leverages computers and machines to mimic the problem-solving and decision-making capabilities of the human mind. The present disclosure discloses a cognitive radar system that incorporates an AI mechanism which chooses, from a list of potential tasks, one task (or more than one tasks in a multi-task scenario) for the cognitive radar system to perform based on the environment. In an embodiment, the decision of which task to choose is made by a rule-based decision engine, and is based on various decision factors that impact the performance of the cognitive radar system, such as the number of people in the scene (e.g., in the field-of-view of the radar sensor 102), the characteristics of the environment of the cognitive radar system, and reflections/interference in the environment. In another embodiment, the decision of which task to choose is made by a neural network decision engine, which makes the decision based directly on the RAI and RDIs without using the decision factors discussed above.

In an example embodiment, the disclosed cognitive radar system chooses a task (or more than one tasks) that can be performed successfully (e.g., achieving the best performance among the list of potential tasks) in the environment. Once the task is chosen, the disclosed cognitive radar system adapts (e.g., adjusts, or modifies) one or more of its parameters to optimize its performance for the chosen task. The disclosed cognitive radar system then operates with the adjusted parameters to perform the chosen task. Details regarding the operation of the disclosed cognitive radar system are discussed hereinafter. To distinguish from the conventional cognitive radar system that only adapts its parameters for a fixed task, the cognitive radar system disclosed herein is also referred to as a fully adaptive cognitive radar system, or a fully adaptive radar system for short.

In some embodiments, the fully adaptive cognitive radar system gathers updated information of the above described decision factors periodically, or evaluates the RAI and RDIs periodically. Based on the updated decision factors (e.g., using a rule-based decision engine), or based on the current RAI and RDIs (e.g., using a neural network decision engine), the fully adaptive cognitive radar system chooses a new (e.g., different) task to perform if the new task would result in the best performance for the fully adaptive cognitive radar system in the current environment. Therefore, the fully adaptive cognitive radar system may choose different tasks to perform over time and adjusts its parameters differently in accordance with the chosen task.

The radar system 100 illustrated in Figure 1 may be used to implement the fully adaptive cognitive radar system, where the intelligence (e.g., choosing the task to perform and deciding how to adaptive the parameters accordingly) of the fully adaptive cognitive radar system may be performed by the processing system 104 of the radar system 100. Details are discussed hereinafter.

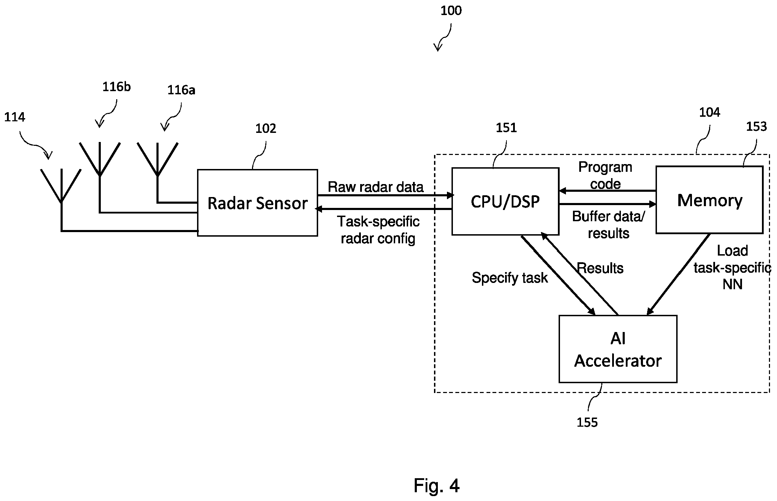

Figure 4 illustrates a block diagram of the millimeter-wave radar system 100 of Figure 1, in accordance with an embodiment. In Figure 4, details of the radar sensor 102 (see Figure 1) are omitted, but more details of the processing system 104 are shown. The millimeter-wave radar system 100 is used to implement the fully adaptive cognitive radar system, and therefore, is also referred to as a fully adaptive cognitive radar system 100, or a fully adaptive radar system 100.

In Figure 4, the processing system 104 includes a processor 151, a memory module 153, and an AI accelerator 155. The processor 151 may be a central processing unit (CPU), a digital signal processor (DSP), or the like. The memory module 153 may be or include a non-volatile memory, and may be used to store, e.g., program code running on the processor 151, intermediate data/results produced by the processor 151, and code for various neural networks (NNs) used for the human sensing applications. The AI accelerator 155 may be an application-specific integrated circuit (ASIC), and may include hardware modules designed for various operations performed by the neural networks. The AI accelerator 155 may carry out the computational-intensive operations of the neural networks to offload the computation burden of the processor 151, and to support real-time operation of the fully adaptive cognitive radar system 100. The AI accelerator 155 may be able to run more than one neural networks simultaneously, e.g., to support more than one tasks performed by the fully adaptive cognitive radar system.

In Figure 4, the processor 151 receives raw radar data from the radar sensor 102, and processes the raw radar data to generate the RAI and RDIs (see, e.g., Figure 3). Based on the RAI and RDIs, the processing system 104 chooses a task from a list of potential tasks for the fully adaptive radar system 100 to perform. Selection of the task for the fully adaptive radar system 100 is performed by a decision engine, which may be a rule-based decision engine or a neural network decision engine. The rule-based decision engine may run on the processor 151, and the neural network decision engine may run on the AI accelerator 155. Details of the rule-based decision engine and the neural network decision engine are discussed hereinafter.

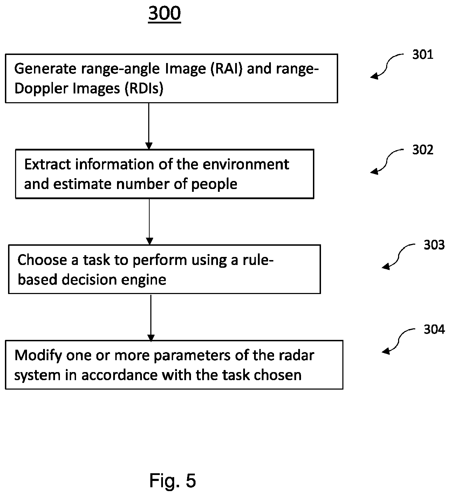

Figure 5 illustrates a flow chart of a method 300 of operating a fully adaptive cognitive radar system using a rule-based decision engine, in accordance with an embodiment. In the various embodiment methods disclosed herein, the fully adaptive cognitive radar system 100 is assumed to operate in an indoor environment (e.g., in a room), although principles disclosed herein may be applied or modified for operating the fully adaptive cognitive radar system 100 in an outdoor environment.

Referring to Figure 5, in block 301, RAI and RDIs are generated. For example, the processor 151 processes the raw radar data to generate the RAI and RDIs, following the processing of Figure 3.

In block 302, information of the environment of the fully adaptive cognitive radar system 100 is extracted from the RAI and the RDIs, and the number of people in the environment (e.g., a room) is estimated. In some embodiments, the processor 151 extracts, from the RAI and the RDIs, information regarding the environment of the fully adaptive cognitive radar system 100, such as the dimension (e.g., size) of the room in which the radar system 100 is located, the background interference signal level (e.g., signal strength for reflections from walls of the room and from furniture in the room) in the room, and occlusion of the scene of the environment (e.g., occlusion of the field-of-view of the radar sensor 102). Occlusion occurs when, e.g., a person in the room walks up close to the radar sensor 102 and occupies most of the scene, which may be an indication that the person wants to interact with the fully adaptive cognitive radar system 100, e.g., in a gesture-controlled gaming application or a gesture-controlled retail application. Methods for extracting the above described information regarding the environment of the radar system from RAI and RDIs are known and used in the art, thus details are not discussed here.

In addition, based on the RAI and RDIs, the number of people in the room is determined using, e.g., a people counting neural network. For example, the processor 151 may load or cause to be loaded the computer code for a people counting neural network (which is stored in the memory module 153) onto the AI accelerator 155. The AI accelerator 155 then runs the people counting neural network to determine the number of people in the room, based on the RAI and RDIs. The results (e.g., number of people in the room) is then sent back to the processor 151. People counting neural network is known and used in the art, thus details are not discussed here.

Next, in block 303, based on the extracted information regarding the environment of the fully adaptive radar system 100 and the number of people in the environment, the processor 151 chooses, from a list of potential tasks, one task (or more than one task in a multi-task scenario) to perform using a rule-based decision engine. The list of potential tasks includes presence sensing, people tracking, people counting, gesture recognition, and vital sensing, in an example embodiment. The rule-based decision engine may run on the processor 151, and may be configured to choose one of the tasks based on the extracted information regarding the environment and the number of people in the environment. Various examples of the rules used by the rule-based engine are discussed below.

In some embodiments, the rule-based decision engine chooses presence sensing as the task for the fully adaptive cognitive radar system 100 to perform, when the number of people in the room is zero. When the room is empty, presence sensing, which may run in a low power mode, may be a natural choice as the task for the fully adaptive cognitive radar system 100. In addition, in order to choose the presence sensing as the task to perform, the rule-based decision engine may check to ensure that the dimension (e.g., size) of the room is smaller than a pre-determined threshold. Since the radar sensor 102 of the fully adaptive cognitive radar system 100 (e.g., a millimeter-wave radar system) may have a limited range, the room size is checked to ensure that the reflected signals from a target anywhere in the room are strong enough (e.g., having a high SNR) such that the subsequent signal processing will produce useful results. Presence sensing is known and used in the art, thus details are not discussed here.

In some embodiments, the rule-based decision engine chooses people tracking as the task for the fully adaptive cognitive radar system 100 to perform, when the number of people in the room is smaller than a pre-determined number (e.g., three or four). If the number of people in the room is too large, the performance of people tracking (e.g., accuracy of tracking) may degrade too much to be useful. In addition, in order to choose people tracking as the task to perform, the rule-based decision engine may check to ensure that the dimension (e.g., size) of the room is smaller than a pre-determined threshold. Furthermore, the rule-based decision engine may check to ensure that the background interference signal level is lower than a pre-determined noise level. People tracking is known and used in the art, thus details are not discussed here.

In some embodiments, the rule-based decision engine chooses people counting as the task for the fully adaptive cognitive radar system 100 to perform, when the number of people in the room is larger than a first pre-determined threshold (e.g., three), and when the dimension (e.g., size) of the room is smaller than a second pre-determined threshold. These conditions may correspond to a crowded room (e.g., the ratio between the number of people in the room and the size of the room is above a pre-determined value) and high background interference signal level. In a crowded room, people tracking may not work well, and people counting may have a higher probability of working well. Besides number of people and room size, the rule-based decision engine may also check to ensure that the background interference signal level is lower than a pre-determined noise level. People counting is known and used in the art, thus details are not discussed here.

In some embodiments, the rule-based decision engine chooses gesture recognition as the task for the fully adaptive cognitive radar system 100 to perform, when the number of people in the room is one, and when an occlusion of the scene of the environment by a person in the scene is detected. As discussed above, detection of occlusion of the scene by a person may indicate that the person wants to interact with the fully adaptive cognitive radar system 100. Gesture recognition is known and used in the art, thus details are not discussed here.

In some embodiments, the rule-based decision engine chooses vital sensing as the task for the fully adaptive cognitive radar system 100 to perform, when the number of people in the room is one and the detected human target is static (e.g., being seated, standing still, or lying down). In some embodiments, prior to choosing vital sensing as the task, the fully adaptive cognitive radar system 100 performs the task of people tracking, and therefore, is able to provide information regarding whether the human target is static or not. In addition, in order to choose vital sensing as the task to perform, the rule-based decision engine may check to ensure that the dimension of the room is smaller than a first pre-determined threshold, and the background interference signal level is below a second pre-determined threshold. Vital sensing is known and used in the art, thus details are not discussed here.

In the various examples above, the decision engine chooses one task to perform. This is, of course, merely a non-limiting example. The decision engine (e.g., rule-based decision engine or neural network decision engine) may choose more than one tasks to perform by the fully adaptive cognitive radar system 100, if all of chosen tasks can be performed successfully. For example, vital sensing and people tracking may be performed at the same time by the fully adaptive cognitive radar system 100. As another example, people tracking and people counting may be performed at the same time by the fully adaptive cognitive radar system 100. In addition, the list of tasks may include any suitable task the fully adaptive cognitive radar system is capable of performing, and is not limited to the example tasks discussed above.

In some embodiments, as the conditions of the environment change over time, the fully adaptive cognitive radar system 100 chooses different task to perform as the environment changes. For example, if the room is empty, presence sensing (e.g., human presence detection) may be chosen as the task to perform in a low power idle mode. Once a person enters the room, the task changes to people tracking, which may enable location related service, such as steering of air flow from air conditioner or an audio beam (e.g., from a TV) produced by a speak array toward the location of the person. Once the room gets too crowded with many people inside, the performance of people tracking task drops, and some user defined adjustments like steering of the air flow or the audio beam don't make sense anymore. Instead the fully adaptive radar system may switch e.g. to the task of people counting. As another example, the fully adaptive radar system 100 may perform people tracking to track a human target in a room initially. As the human target become static (e.g., being seated, standing still, or lying down), the fully adaptive radar system 100 may choose to perform the vital sensing task in place of, or in addition to, the people tracking task. When the human target starts moving again, the fully adaptive radar system 100 may switch back to the people tracking task.

Still referring to Figure 5, in block 304, the processor 151 modifies the fully adaptive cognitive radar system 100 by adjusting one or more parameters of the fully adaptive cognitive radar system 100 in accordance with the chosen task, in order to achieve optimum or near-optimum performance for the chosen task. The parameters of the fully adaptive cognitive radar system 100 adjusted for each chosen task include, e.g., the transmitting power of the radar sensor 102, parameters of the radar signal 106 (e.g., the pulse repetition time of the chirp 106, the bandwidth of the chirp 106, the number of chirps N_{c} per frame), and/or the receiver processing chain of the fully adaptive cognitive radar system 100 (e.g., the number of time samples per chip, single/parallel pipeline in the receiver processing chain for people tracking).

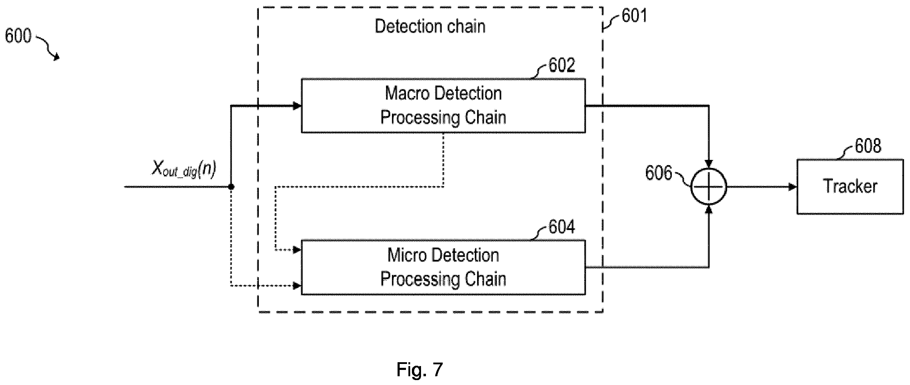

An example is given here to illustrates how the receiver processing chain may be adjusted in accordance with the chosen task for the fully adaptive cognitive radar system 100. Referring temporarily to Figure 7, which shows a diagram of a detection and tracking system 600 for detecting and tracking human targets. The detection and tracking system 600 may be implemented by the processing system 104. The detection and tracking system 600 is described in U.S. Patent Application No. 17/590,587, entitled "Radar-Based Target Tracker," which application is hereby incorporated by reference.

As shown in Figure 7, a detection chain 601 is used to detect one or more targets that are tracked by a tracker 608. In some embodiments, the detection chain 601 includes a macro-Doppler processing chain 602, and a micro-Doppler and/or vital processing chain 604. The macro-Doppler detection processing chain 602 (also referred to as macro detection processing chain) detects and identifies moving targets and high signal-to-noise ratio (SNR) static targets in the field-of-view of millimeter-wave radar sensor 102. For example, in some embodiments, the macro detection processing chain 602 produces an output that includes a set of target parameters associated with the respective detected targets, where each target parameter includes data associated with range, Doppler velocity, and angle of the respective target.

The micro-Doppler detection processing chain 604 (also referred to as micro detection processing chain) detects and identifies static targets in the field-of-view of millimeter-wave radar sensor 102. For example, in some embodiments, the micro detection processing chain 604 produces an output that includes a set of target parameters associated with the respective detected targets, where each target parameter includes data associated with range and angle of the respective target. In some embodiments, the target parameters generated by the micro detection processing chain 604 do not include Doppler velocity, as it may be assumed to be 0 m/s (since the targets detected by the micro detection processing chain 604 are static targets).

As an example, consider the case where the processing system 104 of the fully adaptive cognitive radar system 100 initially chooses people tracking as the task to perform, and uses the detection and tracking system 600 of Figure 7 for detecting and tracking a potentially moving human target. As a result, parallel pipeline in the receiver processing chain, which includes the macro detection processing chain 602 and the micro detection processing chain 604, are used initially. After a period of time, the processing system 104 determines that the human target become static (e.g., being seated, standing still, or lying down). If the processing system 104 also determines from the extracted information of the environment that the room the human target is in is a small room, and the background interference level is low, the processing system 104 may choose vital sensing as the task to perform, in which case the processing system 104 chooses to use only the micro detection processing chain 604 to process the raw radar data, and turn off the macro detection processing chain 602 to save power consumption, computational load, and memory requirement of the fully adaptive radar system 100. As a result, the receiver processing chain now has a single pipeline that includes only the micro detection processing chain 604.

Referring back to Figure 5, once the task is selected and the parameter(s) adjusted, the fully adaptive cognitive radar system 100 operates to perform the selected task with the adjusted parameter(s). In some embodiments, each of the selected tasks is performed using a respective neural network (e.g., a presence sensing neural network, a people tracking neural network, a people counting neural network, a gesture recognition neural network, or a vital sensing neural network), which is stored in the memory module 153 and loaded to run on the AI accelerator 155 when selected. The processor 151 may provide the instruction to the AI accelerator 155 for loading the corresponding neural network(s) for the selected task(s). In some embodiments, the RAI and RDIs are sent from the processor 151 to the neural network running on the AI accelerator 155 as input data for processing. The neural network generates output based on the RAI and RDIs. In some embodiments, the neural network receives the raw radar data as input and generates output based on the raw radar data, in which case RAI and RDIs may still be generated inside the neural network as part of the neural network processing. The output of the neural network is then sent back to the processor 151. In some embodiments, the selected task is performed by signal processing algorithms implemented on the processor 151, and no neural network is used, in which case the program code has functional modules for implementing the signal processing algorithms used for each selected task.

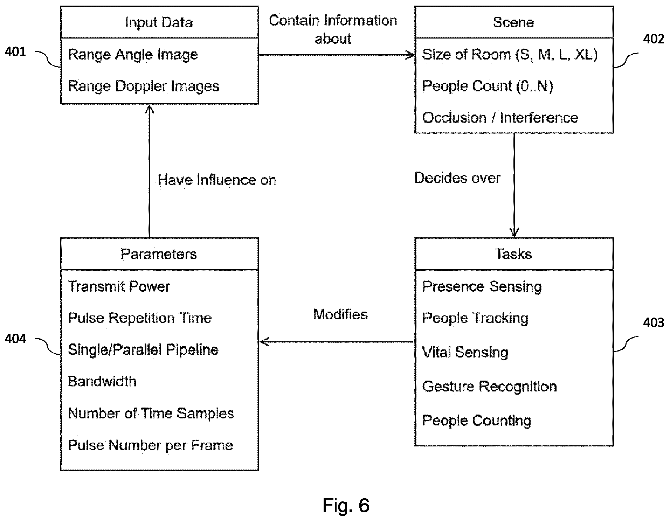

Figure 6 illustrates the information generated by the various processing steps of the method of Figure 5, in accordance with an embodiment. In particular, blocks 401, 402, 403, and 404 correspond to blocks 301, 302, 303, and 304. For example, RAI and RDIs in block 401 of Figure 6 are generated by the processing in block 301 of Figure 5. Block 402 in Figure 6 shows the extracted information (e.g., size of room, occlusion/interference) and people count (e.g., number of people counted) generated by the processing in block 302 of Figure 5. The processing in block 303 of Figure 5 may choose one or more tasks listed in block 403 of Figure 6. The processing in block 304 of Figure 5 may choose one or more parameters listed in block 404 of Figure 6 to modify in accordance with the chosen task.

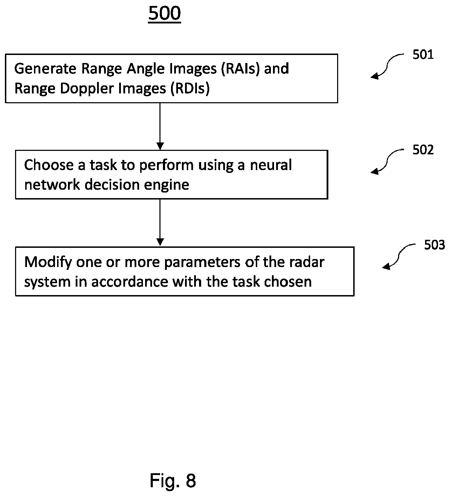

Figure 8 illustrates a flow chart of a method 500 of operating a fully adaptive cognitive radar system using a neural network decision engine, in accordance with an embodiment.

Referring to Figure 5, in block 501, RAI and RDIs are generated. For example, the processor 151 processes the raw radar data to generate the RAI and RDIs, following the processing of Figure 3.

Next, in block 502, the RAI and RDIs generated in block 501 are sent to a neural network decision engine, which chooses a task to perform for the fully adaptive cognitive radar system based on the RAI and RDIs. In an example embodiment, the neural network decision engine is a neural network loaded from the memory module 153 to run on the AI accelerator 155. Therefore, the processor 151 sends the RAI and RDIs to the neural network decision engine, and receives decision (e.g., the task chosen) from the neural network decision engine.

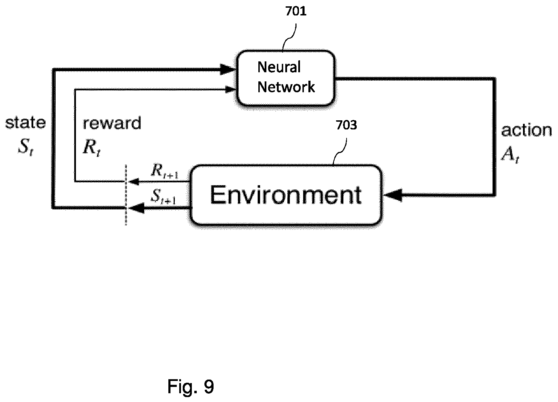

Note that unlike the rule-based decision engine in Figure 5, the neural network decision engine does not need the extracted information (e.g., room size, occlusion/interference level) or the estimate of the number of people in the room to choose the task. Instead, the neural network decision engine receives RAI and RDIs as input, and chooses one task (or more than one tasks) based directly on the RAI and RDIs. In some embodiments, before using the neural network decision engine to choose the task for the fully adaptive cognitive radar system, a training process is performed to train the neural network decision engine. Details of the training process are discussed below with reference to Figure 9.

Next, in block 503 of Figure 8, the processor 151 modifies the fully adaptive cognitive radar system 100 by adjusting one or more parameters of the fully adaptive cognitive radar system 100 in accordance with the chosen task, in order to achieve optimum or near-optimum performance for the chosen task. Once the task is selected and the parameter(s) adjusted, the fully adaptive cognitive radar system 100 operates to perform the selected task with the adjusted parameter(s). Details are the same as or similar to those of method 300 in Figure 5, thus are not repeated here.

Figure 9 illustrates the training of a neural network used for choosing the task to perform for a fully adaptive cognitive radar system, in accordance with an embodiment. In Figure 9, the neural network 701 runs on the AI accelerator 155 and functions as the neural network decision engine. In some embodiments, the neural network 701 is trained using a set of training data that includes ***N*** pairs of RAI and RDIs, and ***N*** optimum tasks for the fully adaptive cognitive radar system to perform, wherein each of the ***N*** optimum tasks corresponds to a respective pair of RAI and RDIs, and is the expected chosen task (e.g., the task that achieves the best performance for the pair of RAI and RDIs) for the neural network 701. Here a pair of RAI and RDIs refers to the RAI and the corresponding RDIs generated using the same raw radar data. For example, for a radar system having ***M*** receiving antennas 106, a pair of RAI and RDIs may include one RAI and ***M*** RDIs generated using the processing of Figure 3. In addition to, or in place of, the ***N*** optimum tasks, the set of training data may also include ***N*** optimum performance metrics, where each of the ***N*** optimum performance metrics corresponds to the expected optimum performance for a respective one of the ***N*** optimum tasks. Each of the ***N*** optimum performance metrics may indicate the quality (e.g., accuracy) of the output generated by the fully adaptive cognitive radar system when the optimum task is performed. For example, if the optimum task for a pair for RAI and RDIs is people counting, then the accuracy of the people counting task performed (e.g., calculated as the ratio between the estimated number of people and the actual number of people in the room) may be used as the optimum performance metric for the pair of RAI and RDIs.

In some embodiments, to perform the training process, a pair of RAI and RDIs (denoted as state ***Sₜ*** in Figure 9), which is generated by processing raw radar data collected in an environment 703, is sent to the neural network 701 as input. The neural network 701, based on its current internal settings, choose a task to perform. The neural network's action of choosing a task is denoted as action ***Aₜ*** in Figure 9. The current internal setting of the neural network is updated after the most recent reward ***Rₜ*** for its most recent decision (e.g., choosing the task for the fully adaptive cognitive radar system) is sent to the neural network 701. The objective of the neural network 701 is to obtain positive rewards for its decisions.

Still referring to Figure 9, the chosen task is performed by the fully adaptive cognitive radar system in the environment 703, and a performance metric ***Rₜₐₛₖ*** is assigned for the chosen task based on the performance of the chosen task. A normalized performance metric ***R**_{**task_**norm}* may be calculated as: ***R_{task_norm}*=*Rₜₐₛₖ*/*Rₒₚₜ*,** where ***Rₒₚₜ*** is the optimum performance metric of the optimum task for the pair of RAI and RDIs.

As an example, consider a scenario where a total of 5 people are in a small crowded room, and the optimum task is people counting, the optimum performance metric ***Rₒₚₜ*** indicates the accuracy of the people counting task performed for this environment, and may be calculated as the ratio between the estimated number of people and the actual number of people in the room. The neural network 701 chooses a task, which may or may not be the same as people counting. The chosen task is performed by the fully adaptive cognitive radar system in the environment 703, and a performance metric ***Rₜₐₛₖ*** is assigned for the chosen task based on the performance of the chosen task. In some embodiments, the values of the optimum performance metric ***Rₒₚₜ*** and the performance metric ***Rₜₐₛₖ*** are in the same range (e.g., between 0 and 1), and therefore, the normalized performance metric ***R_{task_norm}*** can be used to indicate how close the performance of the chosen task is to the optimum performance. Note that for different task chosen, the corresponding performance metric ***Rₜₐₛₖ*** may be defined differently, as skilled artisans readily appreciate. Any suitable way for defining the performance metric ***Rₜₐₛₖ*** may be used, details are not discussed here.

In some embodiments, the normalized performance metric ***R_{task_norm}*** calculated is used to assign a reward ***R*_{*t*+1}.** For example, if the normalized performance metric ***R_{task_norm}*** is larger than a pre-determined threshold ***Rₜₕᵣₑₛₕ*** (e.g., ***R_{task_norm}*** ≥ ***Rₜₕᵣₑₛₕ*),** the reward ***R*_{*t*+1}** is assigned a positive value +1; otherwise, the reward ***R*_{*t*+1}** is assigned a negative value -1. The reward ***R*_{*t*+1}** is then used to update the internal setting of the neural network 701.

In some embodiments, during the training process, extra sensors or equipment are used to help determine the optimum task and/or the optimum performance metric. For example, a video camera may be used to capture the scene, which may be processed to provide the actual number of people in the room (e.g., for presence sensing, people counting), the exact locations of the people in the room (e.g., for people tracking), and the gesture of the people (e.g., for gesture recognition). As another example, a sensor, such as a heart rate monitor, may be worn by a human target to provide the actual vital signal reading (e.g., heart rate for vital sensing).

In another embodiment, the reward ***R*_{*t*+1}** is assigned a negative value (e.g., -1) when the task chosen by the neural network 701 is different from the optimum task for the environment, and is assigned a positive value (e.g., +1) if the task chosen by the neural network 701 matches the optimum task.

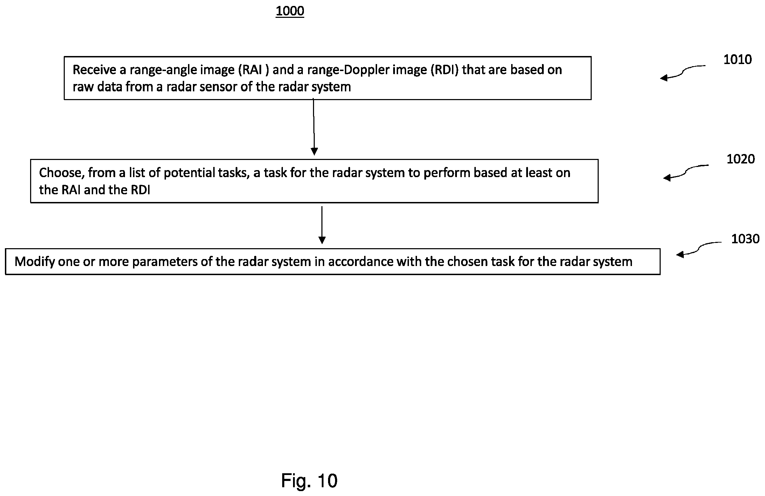

Figure 10 illustrates a flow chart of a method 1000 of operating a radar system, in accordance with an embodiment. It should be understood that the embodiment method shown in Figure 10 is merely an example of many possible embodiment methods. One of ordinary skill in the art would recognize many variations, alternatives, and modifications. For example, various steps as illustrated in Figure 10 may be added, removed, replaced, rearranged, or repeated.

Referring to Figure 10, in block 1010, a range-angle image (RAI) and a range-Doppler image (RDI) that are based on raw data from a radar sensor of the radar system are received. In block 1020, from a list of potential tasks, a task is chosen for the radar system to perform based at least on the RAI and the RDI. In block 1030, one or more parameters of the radar system is modified in accordance with the chosen task for the radar system.

Disclosed embodiments achieve various advantages. For example, by adding awareness to the environment and switching the task performed in accordance with the environment, the fully adaptive radar system can choose to perform the task that can be performed with high confidence (e.g., better performance, better detection/tracking accuracy) for the given environment, thereby avoiding low performance issues such as false detection or prediction if the radar system is limited to performing a fixed task that is not suitable for the given environment. In addition, by adjusting the parameters of the fully adaptive radar system for the chosen task, optimum or near-optimum performance can be achieved for the task chosen. Furthermore, the fully adaptive radar system can achieve reduced power consumption, by automatically adapting its parameters (e.g., transmit power, receiver chain pipeline structure), or by turning off un-used processing pipelines.

Example embodiments of the present invention are summarized here. Other embodiments can also be understood from the entirety of the specification and the claims filed herein.

Example 1. In an embodiment, a method of operating a radar system includes: receiving a range-angle image (RAI) and a range-Doppler image (RDI) that are based on raw data from a radar sensor of the radar system; choosing, from a list of potential tasks, a task for the radar system to perform based at least on the RAI and the RDI; and modifying one or more parameters of the radar system in accordance with the chosen task for the radar system.

Example 2. The method of Example 1, wherein choosing the task for the radar system comprises choosing the task for the radar system using a neural network decision engine, wherein the neural network decision engine receives the RAI and the RDI as input data, and outputs the chosen task for the radar system.

Example 3. The method of Example 2, wherein the list of potential tasks comprises presence sensing, people tracking, people counting, gesture recognition, and vital sensing.

Example 4. The method of any of the preceding Examples, wherein choosing the task for the radar system comprises choosing the task for the radar system using a rule-based decision engine, comprising: extracting information regarding an environment of the radar system from the RAI and the RDI; determining a number of people in the environment of the radar system; and choosing, from the list of potential tasks, the task for the radar system to perform based on the extracted information regarding the environment and the number of people in the environment.

Example 5. The method of Example 4, wherein the radar system is located inside a room, wherein extracting the information comprises computing a size of the room, computing a background interference signal level using the RAI and the RDI, and detecting occlusion of a scene of the environment by a person in the environment.

Example 6. The method of Example 4 or 5, wherein the list of potential tasks comprises presence sensing, people tracking, people counting, gesture recognition, and vital sensing.

Example 7. The method of Example 6, wherein choosing the task for the radar system comprises choosing presence sensing as the task for the radar system when the number of people in the environment is zero.

Example 8. The method of Example 6 or 7, wherein choosing the task for the radar system comprises choosing people tracking as the task for the radar system when the number of people in the environment is smaller than a pre-determined threshold.

Example 9. The method of any of Examples 6 to 8, wherein choosing the task for the radar system comprises choosing vital sensing as the task for the radar system when the number of people in the environment is one, a dimension of the environment is smaller than a first pre-determined threshold, and a background interference signal level is below a second pre-determined threshold.

Example 10. The method of any of Examples 6 to 9, wherein choosing the task for the radar system comprises choosing gesture recognition as the task for the radar system when the number of people in the environment is one and an occlusion of a scene of the environment is detected.

Example 11. The method of any of Examples 6 to 10, wherein choosing the task for the radar system comprises choosing people counting as the task for the radar system when the number of people in the environment is above a first pre-determined threshold and a dimension of the environment is smaller than a second pre-determined threshold.

Example 12. The method of any of the preceding Examples, wherein modifying one or more parameters of the radar system comprises modifying a transmitting power of the radar sensor, modifying at least one parameter of a radar signal of the radar system, or modifying a receiver processing chain of the radar system.

Example 13. In an embodiment, a method of operating a radar system includes: transmitting radar signals using a transmit antenna of the radar system; receiving reflected radar signals using one or more receive antennas of the radar system; generating, by a processing system of the radar system, a range-angle image (RAI) and a range-Doppler image (RDI) that are based on the received reflected radar signals; choosing, by the processing system of the radar system, a task from a list of potential tasks for the radar system to perform based on at least the RAI and the RDI; and modifying, by the processing system of the radar system, one or more parameters of the radar system in accordance with the chosen task for the radar system.

Example 14. The method of Example 13, wherein choosing the task for the radar system comprises choosing the task for the radar system using a neural network, wherein the neural network receives the RAI and the RDI as input data, and outputs the chosen task for the radar system.

Example 15. The method of Example 13 or 14, wherein choosing the task for the radar system comprises: extracting, from the RAI and the RDI, information regarding an environment of the radar system; determining a number of people in the environment of the radar system; and choosing, from the list of potential tasks, the task for the radar system to perform based on the extracted information regarding the environment and the number of people in the environment.

Example 16. The method of Example 15, wherein extracting information regarding the environment of the radar system comprises computing a dimension of the environment, computing a background interference signal level of the environment, or detecting occlusion of a scene of the environment by a person in the environment.

Example 17. The method of any of Examples 13 to 16, wherein modifying the one or more parameters of the radar system comprises modifying a power of the radar signals, modifying one or more parameters of the radar signals, or modifying a structure of a receiver processing chain of the radar system.

Example 18. A radar system includes: a radar sensor configured to transmit a plurality of radar signals towards a scene, receive a plurality of reflected radar signals from the scene, and generate raw data based on the plurality of reflected radar signals; and a processing system configured to: generate a range-angle image (RAI ) and a range-Doppler image (RDI) based on the raw data; choose, from a list of potential tasks, a task for the radar system to perform based on at least the RAI and the RDI; and modify one or more parameters of the radar system in accordance with the chosen task for the radar system.

Example 19. The radar system of Example 18, wherein the processing system is configured to choose the task for the radar system using a neural network, wherein the neural network is configured to receive the RAI and the RDI as input data, and output the chosen task for the radar system.

Example 20. The radar system of Example 18 or 19, wherein the processing system is configured to choose the task for the radar system by: extracting information regarding the scene from the RAI and the RDI; determining a number of people in the scene; and choosing, from the list of potential tasks, the task for the radar system to perform based on the extracted information and the number of people in the scene.

Example 21. The radar system of Example 20, wherein the information regarding the scene comprises a dimension of a room in which the radar system is located, a background interference signal level in the room, and occlusion of the scene by a person in the room.

Example 22. The radar system of any of Examples 18 to 21, wherein the list of potential tasks comprises presence sensing, people tracking, people counting, gesture recognition, and vital sensing.

Example 23. The radar system of Example 22, wherein the one or more parameters of the radar system comprises a power of the radar signals, one or more parameters of the radar signals, or a receiver processing chain of the processing system of the radar system.

While this invention has been described with reference to illustrative embodiments, this description is not intended to be construed in a limiting sense. Various modifications and combinations of the illustrative embodiments, as well as other embodiments of the invention, will be apparent to persons skilled in the art upon reference to the description. It is therefore intended that the appended claims encompass any such modifications or embodiments.

## Claims

1. A method of operating a radar system, the method comprising:
receiving a range-angle image (RAI) and a range-Doppler image (RDI) that are based on raw data from a radar sensor of the radar system;
choosing, from a list of potential tasks, a task for the radar system to perform based at least on the RAI and the RDI; and
modifying one or more parameters of the radar system in accordance with the chosen task for the radar system.

2. The method of claim 1, wherein choosing the task for the radar system comprises choosing the task for the radar system using a neural network decision engine, wherein the neural network decision engine receives the RAI and the RDI as input data, and outputs the chosen task for the radar system.

3. The method of claim 2, wherein the list of potential tasks comprises presence sensing, people tracking, people counting, gesture recognition, and vital sensing.

4. The method of any of the preceding claims, wherein choosing the task for the radar system comprises choosing the task for the radar system using a rule-based decision engine, comprising:
extracting information regarding an environment of the radar system from the RAI and the RDI;
determining a number of people in the environment of the radar system; and
choosing, from the list of potential tasks, the task for the radar system to perform based on the extracted information regarding the environment and the number of people in the environment.

5. The method of claim 4, wherein the radar system is located inside a room, wherein extracting the information comprises computing a size of the room, computing a background interference signal level using the RAI and the RDI, and detecting occlusion of a scene of the environment by a person in the environment.

6. The method of claim 4 or 5, wherein the list of potential tasks comprises presence sensing, people tracking, people counting, gesture recognition, and vital sensing.

7. The method of claim 6, wherein choosing the task for the radar system comprises choosing presence sensing as the task for the radar system when the number of people in the environment is zero.

8. The method of claim 6 or 7, wherein choosing the task for the radar system comprises choosing people tracking as the task for the radar system when the number of people in the environment is smaller than a pre-determined threshold.

9. The method of any of claims 6 to 8, wherein choosing the task for the radar system comprises choosing vital sensing as the task for the radar system when the number of people in the environment is one, a dimension of the environment is smaller than a first pre-determined threshold, and a background interference signal level is below a second pre-determined threshold.

10. The method of any of claims 6 to 9, wherein choosing the task for the radar system comprises choosing gesture recognition as the task for the radar system when the number of people in the environment is one and an occlusion of a scene of the environment is detected.

11. The method of any of claims 6 to 10, wherein choosing the task for the radar system comprises choosing people counting as the task for the radar system when the number of people in the environment is above a first pre-determined threshold and a dimension of the environment is smaller than a second pre-determined threshold.

12. The method of any of the preceding claims, wherein modifying one or more parameters of the radar system comprises modifying a transmitting power of the radar sensor, modifying at least one parameter of a radar signal of the radar system, or modifying a receiver processing chain of the radar system.

13. A radar system comprising:
a radar sensor configured to transmit a plurality of radar signals towards a scene, receive a plurality of reflected radar signals from the scene, and generate raw data based on the plurality of reflected radar signals; and
a processing system configured to generate a range-angle image (RAI ) and a range-Doppler image (RDI) based on the raw data;
choose, from a list of potential tasks, a task for the radar system to perform based on at least the RAI and the RDI; and
modify one or more parameters of the radar system in accordance with the chosen task for the radar system.

14. The radar system of claim 13, wherein the processing system is configured to choose the task for the radar system using a neural network, wherein the neural network is configured to receive the RAI and the RDI as input data, and output the chosen task for the radar system.

15. The radar system of claim 13 or 14, wherein the processing system is configured to choose the task for the radar system by:
extracting information regarding the scene from the RAI and the RDI;
determining a number of people in the scene; and
choosing, from the list of potential tasks, the task for the radar system to perform based on the extracted information and the number of people in the scene.
